# EUROPÄISCHE PATENTANMELDUNG

(11) **EP 3 733 326 A1**
(43) Veröffentlichungstag der Anmeldung: **04.11.2020**
(21) Anmeldenummer: 19171913.7
(22) Anmeldetag: 30.04.2019
(51) Int. Cl.: B22F 3/105, B33Y 80/00, C22C 38/00, C22C 38/02, C22C 38/04, C22C 38/22, C22C 38/24, C22C 38/36, B22F 1/00, B22F 3/24, C21D 1/30, C21D 6/00, C22C 1/05, C22C 33/02, C21D 6/04

(54) **VERFAHREN ZUR HERSTELLUNG EINES STAHLBAUTEILS MIT EINEM ADDITIVEN FERTIGUNGSVERFAHREN**

(71) Anmelder: Deutsche Edelstahlwerke Specialty Steel GmbH & Co. KG, 58452 Witten (DE)
(72) Erfinder: HILL, Horst, Dr., 47929 Grefrath (DE); CONRADS, Janosch, 45309 Essen (DE); KLUGE, Philipp, 47229 Duisburg (DE)
(74) Vertreter: Cohausz & Florack

(57) **Zusammenfassung**

Die Erfindung stellt ein Verfahren zur Herstellung eines Stahlbauteils mit einer Härte von mindestens 45 HRC zur Verfügung. Die Aufgabe, bei einer guten Verarbeitbarkeit in einer additiven Fertigung gleichzeitig eine hohe Härte des Bauteils zu erzielen, wird gelöst durch ein Bereitstellen eines Stahllegierungspulvers aus einem Stahl mit (in Gew.-%) 0,5 - 5,0 % C oder 0,5 - 5,0 % N, wobei C und N auch gleichzeitig vorhanden sein kann und im Fall der gleichzeitigen Anwesenheit die Summe der Gehalte an C und N 0,5 - 6,0 % beträgt, und mindestens einem Karbid- oder Nitridbildner aus der Gruppe "Cr, Mo, V, Ti, Nb, W", ein Formen eines Bauteils aus dem Stahllegierungspulver mit einer additiven Fertigungsmethode, und einem thermischen Behandeln des Bauteils derart, dass die Stahlmatrix des Bauteils nach der thermischen Behandeln mindestens 80 Vol.-% martensitisches Gefüge besitzt und dass der Gehalt an Hartphasen in der Stahlmatrix von 5 - 50 Vol.-% beträgt. Die Erfindung betrifft weiter ein erfindungsgemäß hergestelltes Stahlbauteils mit einer Härte von mindestens 45 HRC.

## Beschreibung

Die Erfindung betrifft ein Verfahren zur Herstellung eines Stahlbauteils mit einer Härte von mindestens 45 HRC umfassend ein Formen eines Bauteils aus einem Stahllegierungspulver mit einer additiven Fertigungsmethode, bei dem sich aneinander angrenzende Pulverpartikel des Stahllegierungspulvers zu einem Bauteil mit einer Stahlmatrix verbinden.

Ebenso betrifft die Erfindung ein Stahlbauteil mit einer Härte von mindestens 45 HRC.

Additive Fertigungsmethoden finden in vielen Industrie- und Anwendungsbereichen zunehmende Verbreitung. Die Herstellung metallischer Bauteile über eine additive Fertigung erfolgt unter anderem auf Grundlage eines Metallpulvers, wobei aneinander angrenzende Partikel im Pulver selektiv und lokalisiert einer Energiequelle ausgesetzt werden. Benachbarte Partikel im Pulver werden somit durch Schmelz- oder Sintervorgänge fest miteinander verbunden.

Die CN 105522264 A, CN 105772909 A und CN 205362963 U betreffen beispielsweise eine Verwendung eines Stickstoff-gestützten Lichtbogens zum 3D-Druck von Stahl. Hierbei wird ein Stahldraht unter Zugabe von Nitridlegiertem Pulver in einem Auftragsschweißen eingesetzt.

Durch den lokalen, vergleichsweise hohen Energieeintrag bei der additiven Fertigung metallischer Werkstoffe werden schnelle Aufheiz- und Abkühlvorgänge induziert, wodurch die Struktur der Werkstoffe starken thermischen Spannungen ausgesetzt wird. Eine Grundvoraussetzung für die additive Fertigung auf Basis metallischer Werkstoffen ist somit eine hohe Schweißbarkeit des Werkstoffs.

Der Einsatz der additiven Fertigungsmethoden zur Herstellung von Stahlbauteilen hoher Härte ist bisher nur begrenzt möglich, da Pulver aus den entsprechenden Grundwerkstoffen schwierig zu fügen sind und die Bauteile zu einer Rissbildung und Verzug neigen. Speziell ist es nicht ohne weiteres möglich, Werkzeugstahlwerkstoffe zur Herstellung von Werkzeugen und Werkzeugoberflächen mit hoher Härte in additiven Fertigungsverfahren einzusetzen.

Stahlwerkstoffe zur Bereitstellung von Bauteilen mit hoher Härte und Verschleißfestigkeit können durch einen höheren Gehalt an Hinzulegierungen erhalten werden. Insbesondere kann unter Zugabe von Kohlenstoff ein martensitisches Gefüge erreicht und Karbiden als Hartphasen ausgeschieden werden. Mit steigendem Gehalt an C können damit harte und verschleißbeständige Werkstoffe erhalten werden, jedoch werden die Werkstoffe mit steigender Härte spröder und die aus der Martensitbildung entstehenden Spannungen können im Werkstoff nicht mehr kompensiert werden. Entsprechend nimmt die Schweißbarkeit mit höheren Legierungsgehalten rapide ab und die Werkstoffe neigen zu starkem Verzug und zur Rissbildung in der additiven Fertigung. Bereits vergleichsweise niedrig legierte Werkzeugstahlwerkstoffe sind hierbei nur bedingt einsetzbar.

Vor diesem Hintergrund ergab sich die Aufgabe der vorliegenden Erfindung, ein Verfahren zur Herstellung eines Stahlbauteils unter Verwendung von additiven Fertigungsmethoden anzugeben, wobei bei einer guten Verarbeitbarkeit in der additiven Fertigung gleichzeitig eine hohe Härte des Bauteils erzielt wird. Insbesondere sollte ermöglicht werden, Methoden der additiven Fertigung prozesssicher auch für die Herstellung von Werkzeugen aus Stahlwerkstoffen einzusetzen.

Die Erfindung hat diese Aufgabe durch ein Verfahren mit den im Anspruch 1 angegebenen Merkmalen gelöst.

Weiter hat die Erfindung diese Aufgabe durch ein Stahlbauteil gemäß Anspruch 12 gelöst.

Vorteilhafte Ausgestaltungen der Erfindung sind in den abhängigen Ansprüchen angegeben und werden nachfolgend im Einzelnen erläutert.

Das erfindungsgemäße Verfahren zur Herstellung eines Stahlbauteils mit einer Härte von mindestens 45 HRC umfasst mindestens die folgenden Schritte:
a) Bereitstellen eines Stahllegierungspulvers aus einem Stahl mit (in Gew.-%)
- 0,5 - 5,0 % C oder 0,5 - 5,0 % N, wobei C und N auch gleichzeitig vorhanden sein kann und im Fall der gleichzeitigen Anwesenheit die Summe der Gehalte an C und N 0,5 - 6,0 % beträgt, und
- mindestens einem Karbid- oder Nitridbildner aus der Gruppe "Cr, Mo, V, Ti, Nb, W ", wobei für die Gehalte an den dieser Gruppe angehörenden Elemente im Fall ihrer Anwesenheit folgende Maßgaben gelten:

| | | | |
|---|---|---|---|
| Cr: | 5 | - | 25 %, |
| Mo: | 0,5 | - | 15 %, |
| V: | 0,5 | - | 15 %, |
| Ti: | 0,5 | - | 5 %, |
| Nb: | 0,5 | - | 15 %, |
| W: | 0,5 | - | 15 %; |

b) Formen eines Bauteils aus dem Stahllegierungspulver mit einer additiven Fertigungsmethode, bei der sich aneinander angrenzende Pulverpartikel des Stahllegierungspulvers zu einem Bauteil mit einer Stahlmatrix verbinden, die nach der Abkühlung auf Raumtemperatur ein zu mindestens 25 Vol.-% austenitisches Gefüge besitzt; und
c) thermisches Behandeln des Bauteils derart, dass die Stahlmatrix des Bauteils nach dem thermischen Behandeln mindestens 80 Vol.-% martensitisches Gefüge besitzt, wobei nach dem thermischen Behandeln der Gehalt an Hartphasen in der Stahlmatrix 5 - 50 Vol.-% beträgt.

Mit der Herstellung eines Stahlbauteils mit einer Härte von mindestens 45 HRC werden somit Bauteile erhalten, welche für hohe Beanspruchungen wie beispielsweise Werkzeuganwendungen geeignet sind. Der Einsatz von additiver Fertigung zum Formen des Bauteils erlaubt dabei ein Freiformen der Bauteilgeometrie und eine flexible Erzeugung von neuen Bauteilen.

Das erfindungsgemäße Stahllegierungspulver kann hierbei eine für additive Fertigungsmethoden zumindest ausreichende Schweißfähigkeit aufweisen. Dies wird unter anderem durch die Gehalte an C und/oder N, die Karbid-und/oder Nitridbildner sowie durch das vorliegende Gefüge gewährleistet, wobei die Stahlmatrix nach der Abkühlung auf Raumtemperatur im Anschluss an das Formen ein überwiegend austenitisches Gefüge aufweist, welches eine hohe Zähigkeit für den Arbeitsschritt des Fügens bereitstellt. Die Gehalte an C und/oder N bewirken eine Stabilisierung von Restaustenit im Gefüge, so dass über die erfindungsgemäß vorgesehenen Gehalte an C und N ein entsprechender austenitischer Gefügeanteil eingestellt werden kann.

Das austentitische Gefüge in den angegebenen Gehalten verleiht dem Werkstoff eine gute Zähigkeit, wodurch die durch die additive Fertigung eingebrachten thermischen Spannungen im Bauteil ausgeglichen werden können. Folglich werden eine Rissbildung und ein Verzug des Bauteils auch unter den beim Formen auftretenden hohen Temperaturgradienten reduziert bzw. vermieden.

Zudem ist die Zusammensetzung des Stahlpulvers insbesondere aufgrund der erfindungsgemäß vorgesehenen Karbid- und/oder Nitridbildner einer Gefügeumwandlung in einer thermischen Behandlung zugänglich, wobei die Stahlmatrix des bereits geformten Bauteils mit dem thermischen Behandeln in einen überwiegend martensitischen Zustand überführt wird. Diese Einstellung des martensitischen Gefüges bewirkt eine deutliche Steigerung der Härte und Verschleißbeständigkeit des additiv gefertigten Bauteils. Zudem kann mit der thermischen Behandlung eine Ausscheidung von Hartphasen wie Karbiden und Nitriden stattfinden, was zu einem weiteren Härteanstieg führt.

Der martensitische Gefügeanteil und der austenitische Gefügeanteil können mittels metallografischer Untersuchungen oder alternativ mittels Röntgendiffraktion (XRD) ermittelt werden.

Zur Steigerung der mechanischen Eigenschaften ist im thermisch behandelten Bauteil ein Gehalt an Hartphasen in der Stahlmatrix von 5 - 50 Vol.-% vorgesehen. Bei den betreffenden Hartphasen handelt es sich um Karbide, Nitride und Karbo-Nitride, welche insbesondere mit den erfindungsgemäß im Stahl vorgesehenen Karbid- oder Nitridbildnern aus der Gruppe Cr, Mo, V, Ti, Nb, W gebildet werden. Durch die erfindungsgemäße Abstimmung der Gehalte an C und/oder N mit den Karbid- oder Nitridbildnern können entsprechende Hartphasengehalte der Stahlmatrix im thermisch behandelten Bauteil eingestellt werden, während die Zusammensetzung des Stahls vor der thermischen Behandlung ein Gefüge mit einem wesentlichem austenitischen Anteil erzeugen kann, um die Zähigkeit und damit die Schweißfähigkeit zu verbessern.

Wenn im vorliegenden Text Angaben zu Legierungsgehalten von Stählen und Stahlwerkstoffen gemacht werden, beziehen sich diese jeweils auf das Gewicht, sofern nicht anders ausdrücklich angegeben.

Der Gehalt an Kohlenstoff von 0,5 - 5,0 % bewirkt im Stahl mehrere Effekte. Zum einen ist Kohlenstoff für die martensitische Härtung der Stahlmatrix zuständig. Weiter entstehen mit den Karbidbildnern wie Cr, Mo, V, Ti, Nb und W harte Karbide im Werkstoff. Zudem dient Kohlenstoff der Stabilisierung des Restaustenits und bewirkt damit eine entsprechende Zähigkeit für die additive Fertigung. Zur Bildung des Restaustenits kann ein Mindestgehalt an Kohlenstoff von 0,5 % vorgesehen sein. Insbesondere wird der in der Metallmatrix in Lösung vorliegende Gehalt an Kohlenstoff mit mindestens 0,5 % gewählt, d.h. der Anteil des Kohlenstoffs, welcher nicht in den Hartphasen wie Karbiden gebunden wird und gelöst bleibt, beträgt insbesondere mindestens 0,5 %. Der Gehalt an Kohlenstoff kann somit auch abhängig vom Gehalt der Karbidbildner gewählt werden. Über die Bildung von Restaustenit werden mit der abschließenden thermischen Behandlung die Umwandlung in Martensit und die Ausscheidung von Hartphasen ermöglicht. Gehalte an Kohlenstoff oberhalb von 5,0 % bewirken jedoch keine deutliche Verbesserung der Härte.

Stickstoff wirkt im Stahl ähnlich wie Kohlenstoff in der Bildung von Restaustenit und der Umwandlung in Martensit sowie zum Erzeugen von Hartphasen in Form von Nitriden. Der Gehalt an Stickstoff wird ebenfalls von 0,5 - 5,0 % gewählt, um die Schweißbarkeit und die hohen Härten durch das thermische Behandeln im Anschluss an eine additive Fertigung des Bauteils zu erzielen.

Aufgrund der ähnlichen Wirkung von Kohlenstoff und Stickstoff können diese Legierungselemente auch in Kombination vorliegen und prinzipiell durch einen Austausch der Elemente ähnliche Werkstoffeigenschaften erzielt werden. Die Summe der Gehalte an C und N sollte mindestens 0,5 % betragen, um die zuvor beschriebenen Effekte im Werkstoff zu erreichen. Insbesondere liegt eine Kombination von C und N im Stahl vor, wobei beide Gehalte jeweils mindestens 0,5 % betragen, womit sich Karbo-Nitride als zusätzliche Hartphasen ausbilden können. Eine Summe der Gehalte an C und N oberhalb von 6,0 % bewirkt jedoch keine weitere deutliche Verbesserung der Eigenschaften.

In Bezug auf die praktische Durchführung und die Ausgestaltungen der Arbeitsschritte a) bis c) des Verfahrens gelten unter anderem folgende Hinweise:

### Arbeitsschritt a)

Die Pulverherstellung kann beispielsweise durch Pulververdüsen oder jedes andere geeignete Verfahren erfolgen. Hierzu kann das Legierungspulver beispielsweise durch Gas- oder Wasserverdüsen oder eine Kombination aus diesen beiden Verdüsungsverfahren erzeugt werden. Denkbar ist eine Verdüsung einer in erfindungsgemäßer Weise legierten Schmelze zu dem Stahllegierungspulver, wobei Legierungsbestandteile bereits über die Schmelze im Vorfeld zur Verdüsung eingebracht werden. Einzelne oder mehrere Legierungsanteile können jedoch auch nach einem Erzeugen der Pulverform einer Stahllegierung eingestellt werden.

Erforderlichenfalls werden aus den Pulverpartikeln für die erfindungsgemäße Weiterverarbeitung durch Sieben und/oder Sichten diejenigen selektiert, die einen Durchmesser von weniger als 200 µm besitzen. Das Stahllegierungspulver weist gemäß einer weiteren Ausgestaltung des Verfahrens eine mittlere Korngröße von 20 µm bis 60 µm und insbesondere von 20 µm bis 53 µm auf. Mit diesen Korngrößen lässt sich das Stahllegierungspulver in vielen additiven Fertigungsmethoden prozesssicher zu Bauteilen verarbeiten. Das Stahllegierungspulver kann zur weiter verbesserten Verarbeitbarkeit eine Schüttdichte von 2 g/cm³ bis 6 g/cm³ (bestimmt nach DIN EN ISO 3923-1), eine Klopfdichte von 3 g/cm³ bis 8 g/cm³ (bestimmt nach DIN EN ISO 3953) und/oder ein Fleißverhalten von weniger als 30 sec/50 g (bestimmt nach DIN EN ISO 4490) aufweisen.

Während das erfindungsgemäße Verfahren neben den Gehalten an C und/oder N sowie den Karbid- und/oder Nitridbildnern nicht auf eine bestimmte Zusammensetzung des Stahls beschränkt ist, können die Legierungsgehalte insbesondere zur Vereinfachung der Bereitstellung des Stahllegierungspulvers weiter eingestellt werden.

In einer Ausgestaltung weist der Stahl einen Gehalt an Si von 0,1 - 2,5 Gew.-% auf. Silizium wird bei der Aufschmelzung von Ausgangsmaterialien zur Desoxidation verwendet. Zudem werden durch die Anwesenheit von Silizium eine Senkung der Schmelztemperatur und eine Reduzierung der Viskosität der Schmelze erreicht. Hieraus erfolgt eine vereinfachte Herstellung des Stahllegierungspulvers insbesondere durch eine Pulververdüsung. Silizium bewirkt zusätzlich eine Verschiebung der Umwandlungsnasen und insbesondere der Ferrit- und Perlitnasen im ZTU-Diagramm zu längeren Zeiten, womit die Durchhärtbarkeit des Stahlwerkstoffes gesteigert wird. Daher ist eine gezielte Zugabe von mindestens 0,1 Gew.-% Si, insbesondere mindestens 0,3 Gew.-% Si und weiter insbesondere 0,7 Gew.-% Si, vorteilhaft. Die Festigkeit des Austenits auf Härtetemperatur wird durch den gelösten Anteil an Si erhöht, womit die höhere Stabilität des Austenits und längere Abkühldauern ermöglicht werden können. Diese Effekte werden bei Si-Gehalten von bis zu 2,5 Gew.-%, insbesondere bis zu 2,0 Gew.-% und weiter insbesondere bis zu 1,5 Gew.-%, erreicht. Zu hohe Gehalte an Si würden zu einer Stabilisierung des Ferrits führen, wodurch der nach dem Härten vorhandene Anteil an Martensit im Gefüge des Stahls vermindert und damit auch die Härte und Verschleißbeständigkeit des hergestellten Bauteils abnimmt.

In einer weiteren Ausgestaltung kann Mangan in Bestandteilen des Stahls vorhanden sein, um die Verdüsbarkeit des Stahls bei der Herstellung des Pulvers und seine Härte zu optimieren. So wird durch die Anwesenheit ausreichender Gehalte an Mn ähnlich wie durch die Anwesenheit von Si der Schmelzpunkt des Stahls gesenkt und die Viskosität der Metallschmelze gesenkt, so dass auch die gezielte Zugabe von Mn zur Vereinfachung des Verdüsungsprozesses beiträgt. Gleichzeitig steigert Mangan ebenfalls die Durchhärtbarkeit des Stahlwerkstoffes. Ebenso trägt der gelöste Anteil an Mn zur Stabilisierung des Austenits bei. Zudem bindet Mn Schwefel durch Bildung von MnS ab, wodurch die Gefährdung von Heißrissen reduziert wird. Diese Effekte werden bei Mn-Gehalten von mindestens 0,1 Gew.-%, insbesondere mindestens 0,3 Gew.-% und weiter insbesondere mindestens 0,7 Gew.-%, und Mn-Gehalten von bis zu 2,5 Gew.-%, insbesondere bis zu 2,0 Gew.-% und weiter insbesondere bis zu 1,5 Gew.-%, betriebssicher erreicht. Zu hohe Gehalte an Mangan könnten hierbei die austenitische Phase soweit stabilisieren, dass die thermische Behandlungsdauer deutlich erhöht würde.

Mindestens ein Karbid- und/oder Nitridbildner aus der Gruppe "Cr, Mo, V, Ti, Nb, W" ist zur Ausbildung der Hartphasen vorgesehen. Chrom und Molybdän beteiligen sich an der Ausbildung von Hartphasen in Form von Karbiden, Nitriden und/oder Karbo-Nitriden, welche bereits im Ausgangszustand vorliegen können und unter anderem durch die thermische Behandlung erzeugt sowie in der Stahlmatrix ausgeschieden werden. Darüber hinaus bewirken Chrom und Molybdän ebenfalls eine verbesserte Durchhärtbarkeit der hergestellten Bauteile. Entsprechend sind minimale Gehalte von 5 % Cr und/oder 0,5 % Mo vorgesehen, wobei bei Gehalten oberhalb von 25 % Cr und/oder 15 % Mo die Schweißbarkeit eingeschränkt wird.

Vanadium dient ebenfalls der Bildung von Hartphasen in Form von Karbiden, Nitriden und/oder Karbo-Nitriden sowie eine Verbesserung der Durchhärtung, wobei Gehalte an V von 0,5 % bis 15 % vorgesehen sein können. Insbesondere liegen die durch die thermische Behandlung erzeugten Hartphasen vorwiegend als vanadiumbasierte Verbindungen vor.

Ähnlich zu den zuvor beschriebenen Effekten von Cr, Mo und V kannnn auch Ti mit einem Gehalt von 0,5 - 5 %, Nb mit einem Gehalt von 0,5 - 15 % und/oder W in einem Gehalt von 0,5 - 15 % vorgesehen sein, um Hartphasen im thermisch behandelten Bauteil auszubilden.

Insbesondere beträgt der Gesamtgehalt der Karbid- oder Nitridbildner aus der Gruppe Cr, Mo, V, Ti, Nb, W maximal 30 Gew.-%, um eine verbesserte Schweißfähigkeit des Stahllegierungspulvers zu erhalten. Für Anwendungen mit hohen Anforderungen an die Schweißfähigkeit kann darüber hinaus ein maximaler Gesamtgehalt der Karbid- oder Nitridbildner aus der Gruppe Cr, Mo, V, Ti, Nb, W von 25 Gew.-% vorgesehen sein.

Der jeweils verbleibende Rest des Stahls besteht aus Eisen und üblichen Verunreinigungen, die aufgrund des Herstellungsverfahrens oder der Ausgangsmaterialien, aus denen die Bestandteile des Stahllegierungspulvers gewonnen werden, in den Stahl gelangen, dort in Bezug auf die Eigenschaften keine wesentliche Wirkung haben. Zu den unvermeidbar vorhandenen Verunreinigungen zählen auch Gehalte an P von bis zu 0,035 Gew.-%, Gehalte an S von bis zu 0,035 Gew.-% sowie beispielsweise in Summe bis zu 0,2 Gew.-% an Sauerstoff.

### Arbeitsschritt b)

Aus dem erfindungsgemäß bereitgestellten Stahllegierungspulver wird in einem additiven Verfahren das jeweilige Bauteil erzeugt werden. Unter dem Begriff "additiv" werden alle Herstellverfahren zusammengefasst, bei denen ein Werkstoff zur Erzeugung eines Bauteils hinzugefügt wird, wobei dieses Hinzufügen in der Regel schichtweise erfolgt. "Additive Herstellverfahren", die in der Fachsprache oft auch als "generative Verfahren" bezeichnet werden, stehen damit im Gegensatz zu den klassischen subtraktiven Fertigungsverfahren, wie den spanenden Verfahren (z.B. Fräsen, Bohren und Drehen), bei denen Material abgetragen wird, um dem jeweils herzustellenden Bauteil seine Form zu verleihen. Das additive Bauprinzip ermöglicht es, geometrisch komplexe Strukturen herzustellen, die mit konventionellen Fertigungsverfahren, wie den schon genannten spanabhebenden Verfahren oder Urformverfahren (z.B. Gießen) bzw. Umformverfahren (z.B. Schmieden) nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv). Nähere Definitionen der Verfahren, die unter dem Oberbegriff "Additive Verfahren" zusammengefasst sind, finden sich beispielsweise in den VDI-Richtlinien 3404 und 3405.

Mit den additiven Fertigungsmethoden werden insbesondere benachbarte Partikel im Stahllegierungspulver selektiv und lokalisiert einer Energiequelle ausgesetzt. Das Stahllegierungspulver wird unter der Wirkung der Energiequelle lokal begrenzt an- oder aufgeschmolzen, so dass aneinander angrenzende Pulverpartikel sich zu einem festen Körper mit einer Stahlmatrix verbinden. Dabei kann die additive Fertigung unter Einsatz von Laserstrahlung und ein selektives Laserschmelzen und/oder Lasersintern durchgeführt werden. Ebenfalls kann das Stahllegierungspulver unter Einwirkung von Elektronen in einem Elektronenstrahlschmelzen bzw. -sintern selektiv gefügt werden. Weitere mögliche additive Fertigungsmethoden umfassen einen 3D-Druck, wobei ein Bindemittel über einen Druckkopf auf das Pulver appliziert wird, sowie das Laserauftragsschweißen.

### Arbeitsschritt c)

Das thermische Behandeln gemäß Arbeitsschritt c) umfasst eine definierte Abfolge von Temperaturen, welchen das Bauteil ausgesetzt wird. In einer Ausführungsform des Verfahrens umfasst das thermische Behandeln ein Anlassen, bei dem das Bauteil auf einer Anlasstemperatur von 400 - 700 °C, insbesondere von 450 - 650 °C durcherwärmt wird. Durch ein Anlassen findet eine Sekundärhärtung des Werkstoffs statt, welche mit der Ausscheidung von Hartphasen wie Anlasskarbiden, Anlassnitriden sowie von Karbo-Nitriden einhergeht, da in diesem Temperaturbereich die Diffusion von C und/oder N gefördert wird. Mit der Ausscheidung von Hartphasen wird die austenitische Phase aufgrund des dadurch verringerten Anteils an gelöstem C und/oder N destabilisiert, wobei mit dem Temperaturbereich von 400 - 700 °C und der Abkühlung eine Umwandlung zumindest eines Teils des austenitischen Gefüges in Martensit bewirkt wird. Die Gefügeumwandlung führt aufgrund der Eigenschaften des Martensits ebenfalls zu einer Härtesteigerung. Die Anlassbehandlung kann mit einer Aufheizgeschwindigkeit von 1 - 20 K/min von Raumtemperatur und/oder mit einer Abkühlgeschwindigkeit von 1 - 20 K/min auf Raumtemperatur durchgeführt werden. Mögliche Werte für die Aufheiz- und Abkühlgeschwindigkeit sind insbesondere jeweils 10 K/min.

Die Haltedauer beim Anlassen nach einem Erreichen der Durchwärmung mit der Anlasstemperatur kann mindestens 30 min betragen, um eine ausreichende Sekundärhärtung zu erzielen. Maximal kann eine Haltedauer von 240 min vorgesehen sein, da längere Behandlungsdauern die Wirtschaftlichkeit des Verfahrens einschränken und zu keiner nennenswerten Härtesteigerung mehr führen. Insbesondere beträgt die Haltedauer 60 - 180 min.

Mit dem Anlassen und der Umwandlung zum Martensit kann weiterhin ein gewisser Anteil an C und/oder N in Zwangslösung in der Stahlmatrix vorliegen, wodurch die Zähigkeit des Bauteils eingeschränkt werden kann. Daher kann vorgesehen sein, das Anlassen mindestens 2-mal zu wiederholen, um den Anteil des gelösten Kohlenstoffs und/oder Stickstoffs weiter zu reduzieren. Insbesondere wird das Anlassen 3-mal wiederholt. Bei mehr als 5 Wiederholungen ergibt sich keine nennenswerte Verbesserung der Zähigkeit, wobei gleichzeitig der Zeitaufwand für das thermische Behandeln unnötig erhöht wird.

Das thermische Behandeln aus Arbeitsschritt c) kann ebenso alternativ oder zusätzlich ein Tiefkühlen umfassen, bei dem das Bauteil vollständig auf eine Temperatur unterhalb von -70 °C abgekühlt wird. Durch ein Tiefkühlen kann die Martensitstarttemperatur der Stahlmatrix unterschritten werden, so dass eine diffusionslosen Umklappung der Stahlmatrix stattfindet und eine Härtesteigerung erreicht wird. Das Tiefkühlen wird insbesondere unter Einsatz von flüssigem Stickstoff vorgenommen. In Ausgestaltungen des Verfahrens kann auch ein Tiefkühlen auf Temperaturen unterhalb von -150 °C durchgeführt werden, um eine weitergehende Umwandlung zu erreichen.

Das Tiefkühlen kann als Alternative zu einem Erwärmen des Bauteils beim thermischen Behandeln eingesetzt werden. Es ist jedoch auch möglich, ein Tiefkühlen mit einem Erwärmen in separaten Behandlungsschritten zu kombinieren. Beispielsweise schließt sich dem Tiefkühlen mindestens eine Anlassbehandlung an, wodurch insbesondere eine Reduzierung der nach dem Tiefkühlen im Martensit zwangsgelösten Gehalte an C und/oder N erreicht werden kann.

Mindestens sind Gehalte an Hartphasen von 5 Vol.-% vorgesehen, um die Erfordernisse der Verschleißbeständigkeit einzuhalten. Bei Gehalten an Hartphasen von 5 Vol.-% bis 15 Vol.-% wird bereits eine gewisse Verschleißbeständigkeit bei ausreichender Härte erzielt. Beträgt der Gehalt der Hartphasen 15 Vol.-% bis 35 Vol.-%, so kann eine für viele Anwendungsbereiche optimierte Härte und Zähigkeit erhalten werden. Zur weiteren Steigerung der Härte können Gehalte an Hartphasen von 35 Vol.-% bis 50 Vol.-% vorgesehen sein. Übersteigt der Gehalt an Hartphasen 50 Vol.-%, geht allerdings eine Neigung zur Sprödigkeit mit einer sehr hohen Härte einher.

Beispielsweise ist die Löslichkeit von Stickstoff in der Schmelze im Vergleich zur festen Phase limitiert, so dass in einer Ausgestaltung des Verfahrens eine Aufstickung vorgenommen wird. Die Aufstickung erfolgt insbesondere vor dem Formen des Bauteils nach Arbeitsschritt c). Hierbei kann zum Erhalten der Bestandteile aus dem Stahl mit einem Gehalt an N von 0,5 - 5,0 % oder mit einem gemeinsamen Gehalt an C und N von 0,5 - 6,0 % das Bereitstellen des Stahllegierungspulvers ein Aufsticken unter Stickstoffgas umfassen. Ein Metallpulver wird einer Stickstoffatmosphäre ausgesetzt, wobei Atmosphäre, Druck, Temperatur und/oder Zeit der Aufstickung so gewählt werden, dass der erwünschte Stickstoffgehalt erzielt wird. Ein solches Aufsticken in Stickstoffatmosphäre kann beispielsweise für eine Dauer von 1 - 15 h bei Temperaturen von 400 °C bis 1000 °C bei einem Druck von 0,5 - 50 bar erfolgen. Ein Aufsticken kann alternativ oder zusätzlich durch ein Zumischen von Nitriden zum Legierungspulver erfolgen, wobei Stickstoff in den Stahlwerkstoff diffundieren kann.

Mit dem erfindungsgemäßen Verfahren kann das erfindungsgemäße Stahlbauteil als Werkzeug ausgestaltet werden, wobei die Vorteile der erzielbaren hohen Härte und Verschleißbeständigkeit mit denen einer additiven Fertigungsmethode kombiniert werden.

Nachfolgend wird die Erfindung anhand von Ausführungsbeispielen näher erläutert.

Ein Stahllegierungspulver wurde auf Grundlage des Werkstoffs FeCrV10 erzeugt. Zunächst wurde durch Pulververdüsung ein Metallpulver mit den in Tab. 1 festgehaltenen Bestandteilen in Gew.-% erzeugt. Die Bestandteile wurden mit einem optischen Funkenspektrometer ermittelt.

**Tabelle 1**

| C | N | Si | Mn | Cr | Mo | V | Fe |
|---|---|---|---|---|---|---|---|
| 2,44 | 0,08 | 0,83 | 0,44 | 5,26 | 1,13 | 9,98 | Bal. |

Das Metallpulver wurde auf einen Kornbereich von 20 µm bis 53 µm abgesiebt, um die Korngröße für eine nachfolgende additive Fertigung zu optimieren. Zudem wurden im Metallpulver noch eine Schüttdichte von 2 g/cm³ bis 6 g/cm³, eine Klopfdichte von 3 g/cm³ bis 8 g/cm³ und/ ein Fleißverhalten von weniger als 30 sec/50 g eingestellt.

Das Metallpulver wurde nach dem Sieben einer Aufstickung unterzogen, wobei das Pulver mit einer Aufheizgeschwindigkeit von 10 K/min von Raumtemperatur auf eine Behandlungstemperatur 850°C gebracht und dort unter einer Stickstoffatmosphäre von 6 bar für 6 h gehalten wurde. Anschließend wurde das Metallpulver mit einer Abkühlgeschwindigkeit von 10 K/min auf Raumtemperatur abgekühlt. Eine Ermittlung des Stickstoffgehalts zeigte eine Erhöhung von 0,08 % vor dem Aufsticken (vgl. Tab. 1) auf einen Gehalt an N von 2,2 % nach dem Aufsticken.

Aus dem Stahllegierungspulver wurden Bauteile durch Anwendung einer additiven Fertigungsmethode in Form von selektiven Laserschmelzen unter Ar-Schutzgasatmosphäre geformt. Quaderförmige Proben mit einer Kantenlänge von 10 x 10 mm² im Querschnitt wurden auf einer Anlage vom Typ SLM 100 des Unternehmens Realizer hergestellt. Die Laserleistung betrug hierbei 100 W, wobei schichtweise Schichtdicken von 30 µm unter einer Belichtungszeit von 100 µs sowie einem Punkt-und Hatchabstand von 30 µm erstellt wurden.

Mit der selektiven, lokalen Erhitzung resultierte ein Anschmelzen bzw. Aufschmelzen aneinander angrenzender Pulverpartikel, wodurch sich die Pulverpartikel des Stahllegierungspulvers zu den Bauteilen mit einer Stahlmatrix verbunden haben.

Nach der Abkühlung auf Raumtemperatur besaß die Stahlmatrix des Bauteils ein zu mindestens 25 Vol.-% austenitisches Gefüge, was durch die Stahllegierungszusammensetzung und insbesondere die Aufstickung ermöglicht wird. Beim Laserschmelzen war keine nennenswerte Rissbildung oder Verzug der hergestellten Bauteile zu beobachten, so dass das Stahllegierungspulver erfindungsgemäß in der additiven Fertigung eingesetzt werden konnte.

Die entsprechend geformten Bauteile wurden anschließend einem thermischen Behandeln unterzogen, wobei sich ein Gehalt von mindestens 80 Vol.-% martensitischem Gefüge einstellte, welches durch Umwandlung des unter anderem mittels C und N stabilisierten Restaustenits mittels Anlassen erhalten wurde.

Mit dem Anlassen wurde das Bauteil mit einer Aufheizgeschwindigkeit von 10 K/min auf eine Anlasstemperatur von 500 °C für 2 h durcherwärmt, um anschließend mit einer Abkühlgeschwindigkeit von 10 K/min auf Raumtemperatur abgekühlt zu werden. Das Anlassen wurde mit den gleichen Parametern dreimal wiederholt, insbesondere um zwangsgelöste Anteile an C und N zu reduzieren.

Mit den Karbid- und Nitridbildnern, dem vorgesehenen Gehalt an C sowie dem durch Aufstickung angereicherten Gehalt an N stellte sich ein Gehalt an Hartphasen in der Stahlmatrix von 5 - 50 Vol.-% ein. Insbesondere konnte ein Gehalt an Hartphasen zwischen 15 und 25 Vol.-% in der Stahlmatrix erreicht werden, so dass eine für Werkzeuganwendungen optimierte Härte und Zähigkeit vorlag.

Ein thermisches Behandeln kann ebenso prinzipiell ein Tiefkühlen umfassen, bei dem das Bauteil vollständig auf eine Temperatur unterhalb von -70 °C mittels flüssigen Stickstoffs abgekühlt wird, um eine Umwandlung von Restaustenit zu bewirken.

Die Härten der entsprechend hergestellten Bauteile wurden im Ausgangszustand vor dem Anlassen und im angelassenen Zustand ermittelt, wobei hierzu fünf Einzelmessungen gemittelt wurden. Im Ausgangszustand wurde eine vergleichsweise niedrige Härte in HV0,5 von 517±45 festgestellt, welche insbesondere auf den Gehalt an Restaustenit zurückzuführen war. Dagegen steigerte sich die Härte in HV0,5 auf 857±64 nach dem Anlassen.

Mit den hohen Härten können somit prozesssicher Bauteile in einer additiven Fertigung hergestellt werden, welche auch für Werkzeuge und Werkzeuganwendungen mit den Anforderungen an hohe Verschleißbeständigkeit geeignet sind.

## Patentansprüche

1. Verfahren zur Herstellung eines Stahlbauteils mit einer Härte von mindestens 45 HRC umfassend mindestens die folgenden Schritte:
a) Bereitstellen eines Stahllegierungspulvers aus einem Stahl mit (in Gew.-%)
- 0,5 - 5,0 % C oder 0,5 - 5,0 % N, wobei C und N auch gleichzeitig vorhanden sein kann und im Fall der gleichzeitigen Anwesenheit die Summe der Gehalte an C und N 0,5 - 6,0 % beträgt, und
- mindestens einem Karbid- oder Nitridbildner aus der Gruppe "Cr, Mo, V, Ti, Nb, W", wobei für die Gehalte an den dieser Gruppe angehörenden Elemente im Fall ihrer Anwesenheit folgende Maßgaben gelten:
| | | | |
|---|---|---|---|
| Cr: | 5 | - | 25 %, |
| Mo: | 0,5 | - | 15 %, |
| V: | 0,5 | - | 15 %, |
| Ti: | 0,5 | - | 5 %, |
| Nb: | 0,5 | - | 15 %, |
| W: | 0,5 | - | 15 %; |
b) Formen eines Bauteils aus dem Stahllegierungspulver mit einer additiven Fertigungsmethode, bei der sich aneinander angrenzende Pulverpartikel des Stahllegierungspulvers zu einem Bauteil mit einer Stahlmatrix verbinden, die nach der Abkühlung auf Raumtemperatur ein zu mindestens 25 Vol.-% austenitisches Gefüge besitzt;
c) thermisches Behandeln des Bauteils derart, dass die Stahlmatrix des Bauteils nach dem thermischen Behandeln mindestens 80 Vol.-% martensitisches Gefüge besitzt, wobei nach dem thermischen Behandeln der Gehalt an Hartphasen in der Stahlmatrix 5 - 50 Vol.-% beträgt.

2. Verfahren nach Anspruch 1, **dadurch gekennzeichnet, dass** das thermische Behandeln (Arbeitsschritt c)) ein Anlassen umfasst, bei dem das Bauteil mit einer Anlasstemperatur von 400 - 700 °C durcherwärmt wird, wobei insbesondere eine Aufheizgeschwindigkeit von 1 - 20 K/min und/oder eine Abkühlgeschwindigkeit von 1 - 20 K/min verwendet wird.

3. Verfahren nach Anspruch 2, **dadurch gekennzeichnet, dass** das Anlassen ein Halten bei der Anlasstemperatur für 30 - 240 min umfasst.

4. Verfahren nach Anspruch 2 oder 3, **dadurch gekennzeichnet, dass** das Anlassen 2 - 5-mal wiederholt wird.

5. Verfahren nach einem der voranstehenden Ansprüche, **dadurch gekennzeichnet, dass** das thermische Behandeln (Arbeitsschritt c)) ein Tiefkühlen umfasst, bei dem das Bauteil vollständig auf eine Temperatur unterhalb von -70 °C, insbesondere unterhalb von -150 °C abgekühlt wird.

6. Verfahren nach einem der voranstehenden Ansprüche, **dadurch gekennzeichnet, dass** der Stahl weiter folgende Bestandteile aufweist (in Gew.-%):
| | | | |
|---|---|---|---|
| Si: | 0,1 | - | 2,5 % und/oder |
| Mn: | 0,1 | - | 2,5 %. |

7. Verfahren nach einem der voranstehenden Ansprüche, **dadurch gekennzeichnet, dass** nach dem thermischen Behandeln der Gehalt an Hartphasen in der Stahlmatrix 15 - 35 Vol.-% beträgt.

8. Verfahren nach einem der voranstehenden Ansprüche, **dadurch gekennzeichnet, dass** das Stahllegierungspulver eine mittlere Korngröße von kleiner als 200 µm aufweist, insbesondere eine mittlere Korngröße von 5 - 60 µm aufweist.

9. Verfahren nach einem der voranstehenden Ansprüche, **dadurch gekennzeichnet, dass** das Bereitstellen des Stahllegierungspulvers ein Aufsticken eines Metallpulvers unter einer Stickstoffatmosphäre und/oder ein Zumischen von Nitriden zu einem Metallpulver umfasst.

10. Verfahren nach einem der voranstehenden Ansprüche, **dadurch gekennzeichnet, dass** die additive Fertigungsmethode mindestens eines von selektivem Laserschmelzen, Lasersintern, Elektronenstrahlschmelzen und Laserauftragsschweißen umfasst.

11. Verfahren nach einem der voranstehenden Ansprüche, **dadurch gekennzeichnet, dass** das Stahlbauteil als Werkzeug ausgestaltet wird.

12. Stahlbauteil mit einer Härte von mindestens 45 HRC, hergestellt nach einem Verfahren nach einem der voranstehenden Ansprüche.
